# EUROPÄISCHE PATENTSCHRIFT

(11) **EP 2 720 920 B1**
(45) Veröffentlichungstag und Bekanntmachung des Hinweises auf die Patenterteilung: **27.04.2016**
(21) Anmeldenummer: 12722298.2
(22) Anmeldetag: 16.05.2012
(51) Int. Cl.: F02D 28/00, B60W 10/06, B60W 10/08, B60W 20/00, B60W 50/08, B60W 30/18

(54) **VERFAHREN ZUM BESCHLEUNIGEN EINES FAHRZEUGS SOWIE HYBRIDFAHRZEUG**
METHOD FOR ACCELERATING A VEHICLE AND HYBRID VEHICLE
PROCÉDÉ POUR ACCÉLÉRER UN VÉHICULE ET VÉHICULE HYBRIDE

(30) Priorität: 17.06.2011 DE 102011104395
(43) Veröffentlichungstag der Anmeldung: 23.04.2014
(73) Patentinhaber: Audi AG, 85045 Ingolstadt (DE)
(72) Erfinder: MEITINGER, Karl-Heinz, 81667 München (DE); ULLMANN, Stefan, 80797 München (DE)
(74) Vertreter: Wohnert, Dietmar
(86) Internationale Anmeldenummer: PCT/EP2012/002094
(87) Internationale Veröffentlichungsnummer: WO 2012/171607

(56) Entgegenhaltungen:
- DE-A1-102006 045 824
- DE-A1-102007 045 365
- DE-A1-102007 050 652
- DE-A1-102007 055 828

## Beschreibung

Die Erfindung betrifft ein Verfahren zum Beschleunigen eines Fahrzeugs mit einem Elektromotor als Antrieb und einem Verbrennungsmotor als Antrieb, also zum Beschleunigen eines Hybridfahrzeugs. Sie betrifft auch ein solches Hybridfahrzeug.

Insbesondere beim Beschleunigen eines Hybridfahrzeugs aus dem Stand ist es sinnvoll, die Beschleunigung zunächst mit Hilfe des Elektromotors durchzuführen, weil dieser bei niedrigen Drehzahlen ein hohes Moment aufbringen kann. Bei höheren Drehzahlen ist sodann ein Wechsel zum Antrieb mit dem Verbrennungsmotor hilfreich.

Häufig ist der Verbrennungsmotor jedoch zuvor ausgeschaltet, z. B. bei einem Start-Stopp-Betrieb nach einem vollständigen Halt des Fahrzeugs. Will man dann nach Beginn des Beschleunigens durch den Elektromotor den Verbrennungsmotor zuzuschalten, muss dieser zunächst angeschleppt werden, um gestartet werden zu können. Zum Anschleppen kann ein gesonderter Elektromotor verwendet werden; dieser Fall ist vorliegend nicht von Interesse. Vorliegend wird der Fall betrachtet, dass zum Anschleppen des Verbrennungsmotors der Elektromotor, der als Antrieb dient, verwendet wird.

Will man mitten in einer Fahrphase des Beschleunigens plötzlich mit Hilfe des beschleunigenden Elektromotors auch noch den Verbrennungsmotor anschleppen, so muss für Letzteres ein bestimmtes Moment vorrätig gehalten werden, das der Elektromotor aufbringt. Mit anderen Worten beschleunigt man nur mit einem Teilmoment eines verfügbaren Moments des Elektromotors, damit zu einem späteren Zeitpunkt die Differenz zwischen verfügbarem Moment und Teilmoment dazu genutzt werden kann, den Verbrennungsmotor anzuschleppen; sonst käme es beim Übergang zum Anschleppen des Verbrennungsmotors zu einem Ruck durch die Verringerung des antreibenden Moments, den man vermeiden möchte.

Von manchen Fahrzeugen her, z. B. von Sportfahrzeugen her, kennt man die sog. Launch-Control. Dies ist die Möglichkeit, das Fahrzeug in einen Modus zu versetzen, in dem es beim Beschleunigen aus dem Stand möglichst schnell eine bestimmte Geschwindigkeit erreicht, z. B. möglichst schnell von 0 auf 100 km/h beschleunigt. Bei Sportfahrzeugen gibt es z. B. Betätigungselemente, durch die, z. B. bei einem Ampelstart, kurzzeitig dieser Modus einschaltbar ist. Bei Hybridfahrzeugen kennt man einen solchen Modus nicht.

In der DE 10 2007 055 828 A1 ist ein Verfahren zum Betrieb eines Hybridfahrzeugs beschrieben, bei dem der Verbrennungsmotor aus einem elektrischen Fahrbetrieb in verschiedenen Modi startbar ist. Als Motorstartvarianten werden dabei ein Schleppstart, ein Zugstart und zugkraftunterbrochener Motorstart beschieben. Dabei wird ein Startmodus bei einer Startanforderung mit Hilfe einer Auswertung vorgegebener Auswahlkriterien je nach momentaner Betriebssituation ausgewählt.

Das gattungsbildende Dokument DE 10 2006 045 824 A1 beschreibt ein Verfahren zur Steuerung eines Hybridfahrzeugantriebs, bei dem verschiedene Fahrmodi zur Verfügung stehen, die ein Boostverhalten in einer vorgegebenen Betriebssituation betreffen. Dabei kann ein Modus vom Fahrer durch einen manuell bedienbaren Sportschalter ausgewählt werden.

Die DE 10 2009 027 642 A1 beschreibt ein Verfahren zum Betreiben eines Hybridfahrzeugs, bei dem bei einem Erststart ein elektrisches Anfahren des Hybridfahrzeugs erfolgt, wobei vor, mit oder nach dem Anfahren der Verbrennungsmotor gestartet wird und in einem separierten Verbrennungsbetrieb zum Aufheizen des Katalysators betrieben wird. Weiterhin wird verhindert, dass der Verbrennungsmotor zum Antrieb beiträgt, solange der Katalysator nicht aufgeheizt ist.

Es ist die Aufgabe der Erfindung, ein Verfahren zum Beschleunigen eines Hybridfahrzeugs sowie ein Hybridfahrzeug bereitzustellen, durch das neue Möglichkeiten beim Betrieb des Hybridfahrzeugs geschaffen werden.

Die Aufgabe wird in einem Aspekt durch ein Verfahren mit den Merkmalen gemäß Patentanspruch 1 und in einem anderen Aspekt durch ein Kraftfahrzeug mit den Merkmalen gemäß Patentanspruch 4 gelöst.

Bei dem erfindungsgemäßen Verfahren erfolgt das Beschleunigen wahlweise in zwei Modi: In einem ersten Modus beschleunigt zuerst der Elektromotor das Fahrzeug mit einem Teilmoment eines verfügbaren Moments, setzt zu einem späteren Zeitpunkt dieses Beschleunigen fort und schleppt gleichzeitig den Verbrennungsmotor an (und zwar vorzugsweise mit höchstens der Differenz zwischen verfügbarem Moment und Teilmoment), und nach Anschleppen des Verbrennungsmotors trägt dieser zum Beschleunigen des Fahrzeugs bei. In einem zweiten Modus beschleunigt der Elektromotor das Fahrzeug zunächst mit dem vollen verfügbaren Moment und später übernimmt der Verbrennungsmotor das Beschleunigen des Fahrzeugs oder trägt zum Beschleunigen bei, wobei in dem zweiten Modus mit Beginn des Beschleunigens oder mit Auswahl des zweiten Modus der Verbrennungsmotor eingeschaltet wird und im Leerlauf betrieben wird, bis er zum Beschleunigen des Fahrzeugs beiträgt.

Die Erfindung beruht auf der Erkenntnis, dass je nach Unständen das Beschleunigen gemäß dem einen Modus oder gemäß dem anderen Modus vorteilhaft bzw. gewünscht sein kann. In dem ersten Modus ist dafür gesorgt, dass es nicht oder wenigstens in verringertem Maße zu einem Ruck kommt, wenn der Elektromotor dazu übergeht, den Verbrennungsmotor anzuschleppen. Somit ist im ersten Modus für einen guten Fahrkomfort gesorgt. Im zweiten Modus hingegen kann das Fahrzeug schneller beschleunigt werden, was in manchen Situationen sehr wichtig sein kann, sei es für eine Befriedigung eines Fahrerwunsches, sei es auch, um in erhöhtem Maße für eine Sicherheit bei der Fahrt zu sorgen, z. B. beim Überholen eines anderen Fahrzeugs.

In dem zweiten Modus wird bereits mit Beginn des Beschleunigens oder schon bei Aktivieren des zweiten Modus der Verbrennungsmotor eingeschaltet, nachfolgend im Leerlauf betreiben, bis er das Beschleunigen des Fahrzeugs übernimmt. Auf diese Weise kann der genannte Ruck vermieden werden. Der erhöhte Kraftstoffverbrauch kann in Kauf genommen werden, um die gewünschte schnelle Beschleunigung zuverlässig zu erzielen.

Bevorzugt wird vor dem Beschleunigen ein Betätigungselement betätigt, wenn der zweite Modus eingenommen werden soll. Dies ist vorteilhaft, wenn der Fahrzeugführer sehr schnell die Möglichkeit haben soll, den Modus zu wählen.

Die Erfindung ist grundsätzlich auch dann anwendbar, wenn das Beschleunigen nicht aus dem Stand erfolgt, sondern aus einer niedrigen Geschwindigkeit heraus. Es ist jedoch bereits eine neue Funktionalität geschaffen, wenn sie bei einem Beschleunigen aus dem Stand heraus realisiert wird. Dies kann mit einem Start-Stop-Betrieb des Fahrzeugs einhergehen, bei dem der Verbrennungsmotor beim Anhalten (Stoppen) des Fahrzeugs abgeschaltet wird.

Das erfindungsgemäße Kraftfahrzeug ist gekennzeichnet durch eine Eingabeeinrichtung, bevorzugt in Form einer Betätigungseinrichtung, zum Wechseln eines bei einem Beschleunigen (insbesondere aus dem Stand) eingenommenen Modus, wobei es sich um die beiden zum erfindungsgemäßen Verfahren genannten Modi handeln soll.

Bei dem erfindungsgemäßen Kraftfahrzeug ist somit auf sehr unkomplizierte Weise, bei einer Betätigungseinrichtung sogar in der Regel besonders schnelle Weise, eine Wahl des jeweiligen Modus möglich, was für den Fahrer als komfortabel empfunden wird; durch das Bereitstellen der beiden Modi ist eine zusätzliche Funktionalität im Kraftfahrzeug gegeben, es verfügt nämlich über die Möglichkeit der sog. "Launch-Control".

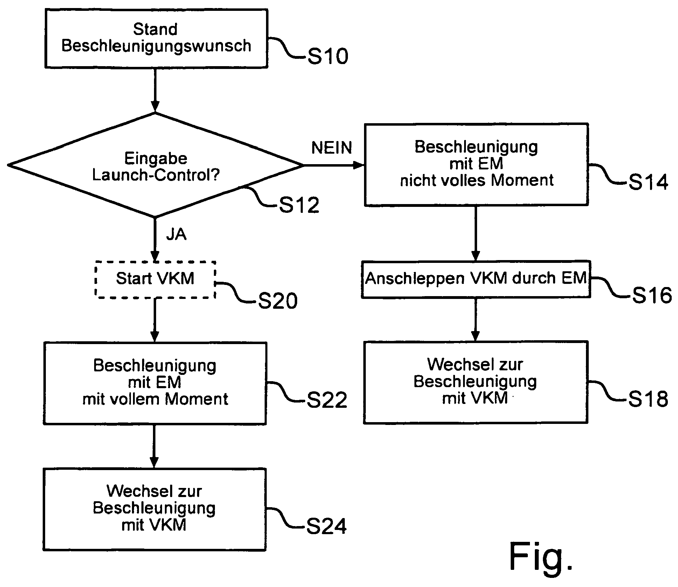

Nachfolgend wird eine bevorzugte Ausführungsform der Erfindung unter Bezug auf die Zeichnung näher beschrieben, in der die
Fig. 1 als einzige Figur ein Flussschaubild zur Erläuterung einer Ausführungsform des erfindungsgemäßen Verfahrens ist.

Ein Hybridfahrzeug soll über einen Elektromotor und einen Verbrennungsmotor verfügen. Beide können auf die selbe Achse arbeiten, die Erfindung ist jedoch auch dann anwendbar, wenn der Elektromotor auf die eine Achse arbeitet und der Verbrennungsmotor auf die andere Achse. Die Erfindung ist ferner auch dann anwendbar, wenn ein Hybridantrieb mit Elektromotor und Verbrennungsmotor bei einer Achse bereitgestellt ist und im Bereich der weiteren Achse ein zusätzlicher Antrieb, insbesondere ein zusätzlicher Elektromotor, bereitgestellt ist.

Ein Hybridfahrzeug wird üblicherweise derart betrieben, dass es bei einem Halt des Fahrzeugs den Verbrennungsmotor ausschaltet, damit nicht in übermäßigem Maße Abgase in die Umwelt gelangen und Kraftstoff verbraucht wird.

Das Verfahren in der vorliegenden Ausführungsform setzt nach einem solchen Stopp ein, also im Stand des Fahrzeugs gemäß Schritt S10, wobei vorliegend ein Beschleunigungswunsch gegeben sein soll; z. B. kann der Fahrzeugführer das Gaspedal betätigt haben, eine automatische Fahrtgeschwindigkeitsregelung kann erkannt haben, dass das vorausfahrende Kraftfahrzeug sich aus dem Stand in Bewegung versetzt hat oder eine Ampel auf Grün geschaltet ist, oder es kann ein sonstiges Eingabeelement in dem Kraftfahrzeug durch den Fahrzeugführer betätigt worden sein.

Nach Schritt S10 wird in Schritt S12 geprüft, ob eine spezifische Eingabe erfolgt ist, nämlich eine Eingabe zur sog. "Launch-Control". Bei der Launch-Control soll das Kraftfahrzeug mit einer möglichst hohen Beschleunigung beschleunigt werden. Für die Eingabe stehe vorliegend ein Bedienelement, wie z. B. ein Betätigungsknopf, in dem Kraftfahrzeug zur Verfügung. Solange die Eingabe in Schritt S12 nicht erfolgt ist, aber in Schritt S10 ein Beschleunigungswunsch gegeben ist, erfolgt in Schritt S14 die Beschleunigung mit Hilfe des Elektromotors, es wird aber nicht dessen volles zur Verfügung stehendes Drehmoment ausgenutzt. Der Grund hierfür ist, dass nach einer Anfangsfangsphase der Beschleunigung bei einer bestimmten Drehzahl in Schritt S16 begonnen wird, die Verbrennungskraftmaschine des Fahrzeugs durch den Elektromotor anzuschleppen, d. h. ihre Drehzahl zu erhöhen, indem beispielsweise eine Kupplung zwischen dem Elektromotor und der Verbrennungskraftmaschine geschlossen wird. Da in Schritt S14 die Beschleunigung mit nur einem Teilmoment des verfügbaren Moments erfolgte, steht noch ein Restmoment zur Verfügung, das für das Anschleppen genutzt werden kann. Auf diese Weise kann die Beschleunigung mit Hilfe des Elektromotors während des Anschleppens der Verbrennungskraftmaschine fortgesetzt werden, und der Fahrzeugführer merkt von dem Anschleppen der Verbrennungskraftmaschine nichts oder kaum etwas. Insbesondere gibt es keinen Ruck mit nachlassender Beschleunigung. Nach einer Phase des Anschleppens der Verbrennungskraftmaschine und dem Erreichen einer bestimmten Drehzahl wird in Schritt S18 ein Wechsel vorgenommen, und es wird nachfolgend zumindest teilweise mit der Verbrennungskraftmaschine beschleunigt.

Wird in Schritt S12 eine Eingabe zur Launch-Control empfangen - dies kann die selbe Eingabe sein, durch die auch der Beschleunigungswunsch mitgeteilt wird - , so wird in Schritt S20 optional die Verbrennungskraftmaschine unmittelbar gestartet. Sie kann hierbei durch den Elektromotor angeschleppt werden, wobei beim Starten möglicherweise gleichzeitig eine Beschleu-nigung mit Hilfe des Elektromotors bei nicht vollem Moment erfolgen kann. Jedenfalls wird mit dem Start der Verbrennungskraftmaschine begonnen, und nachfolgend wird in Schritt S22 zu einer Beschleunigung mit dem Elektromotor übergegangen, die mit dem vollen verfügbaren Moment erfolgt. Die Verbrennungskraftmaschine läuft währenddessen weiter, bis in Schritt S24 ein Wechsel zur Beschleunigung mit der Verbrennungskraftmaschine erfolgt.

Der Modus gemäß den Schritten S20, S22 und S24 ermöglicht eine besonders schnelle Beschleunigung auf Kosten des Kraftstoffverbrauchs, und zwar auf eine Eingabe hin, d. h. entsprechend einem Fahrerwunsch. Ansonsten wird ein vom Fahrer als komfortabel und kraftstoffsparend empfundener Modus gemäß den Schritten S14, S16 und S18 eingenommen.

## Patentansprüche

1. Verfahren zum Beschleunigen eines Fahrzeugs, mit einem Elektromotor als Antrieb und einem Verbrennungsmotor als Antrieb, wobei das Beschleunigen wahlweise in zwei Modi erfolgt, wobei in einem ersten Modus zunächst der Elektromotor das Fahrzeug mit einem Teilmoment seines verfügbaren Moments beschleunigt und zu einem späteren Zeitpunkt dieses Beschleunigen fortsetzt und gleichzeitig den Verbrennungsmotor anschleppt, und wobei nach Anschleppen des Verbrennungsmotors dieser sodann zum Beschleunigen des Fahrzeugs beiträgt, und wobei in einem zweiten Modus der Elektromotor das Fahrzeug zunächst mit dem vollen verfügbaren Moment beschleunigt, wobei später der Verbrennungsmotor zum Beschleunigen des Fahrzeugs beiträgt, **dadurch gekennzeichnet, dass**
in dem zweiten Modus mit Beginn des Beschleunigens oder mit Auswahl des zweiten Modus der Verbrennungsmotor eingeschaltet wird und im Leerlauf betrieben wird, bis er zum Beschleunigen des Fahrzeugs beiträgt.

2. Verfahren nach Anspruch 1, **dadurch gekennzeichnet, dass** vor dem Beschleunigen ein Betätigungselement betätigt wird, wenn der zweite Modus eingenommen werden soll.

3. Verfahren nach einem der vorhergehenden Ansprüche, **dadurch gekennzeichnet, dass** das Beschleunigen aus dem Stand erfolgt.

4. Kraftfahrzeug mit einem Elektromotor als Antrieb und einem Verbrennungsmotor als Antrieb, **gekennzeichnet durch** eine Eingabeeinrichtung, die ausgebildet ist zum Wechseln eines bei einem Beschleunigen eingenommenen Modus, wobei ein erster Modus dadurch definiert ist, dass im ersten Modus zunächst der Elektromotor das Fahrzeug mit einem Teilmoment seines verfügbaren Moments beschleunigt und zu einem späteren Zeitpunkt dieses Beschleunigen fortsetzt und gleichzeitig den Verbrennungsmotor anschleppt, und wobei nach Anschleppen des Verbrennungsmotors dieser sodann zum Beschleunigen des Fahrzeugs beiträgt, und wobei ein zweiter Modus **dadurch** definiert ist, dass im zweiten Modus der Elektromotor das Fahrzeug zunächst mit dem vollen verfügbaren Moment beschleunigt, wobei später der Verbrennungsmotor zum Beschleunigen des Fahrzeugs beiträgt und wobei in dem zweiten Modus mit Beginn des Beschleunigens oder mit Auswahl des zweiten Modus der Verbrennungsmotor eingeschaltet wird und im Leerlauf betrieben wird, bis er zum Beschleunigen des Fahrzeugs beiträgt.

## Claims

1. Method for accelerating a vehicle comprising an electric motor as a drive and an internal combustion engine as a drive, wherein the acceleration is performed optionally in two modes, wherein in a first mode firstly the electric motor accelerates the vehicle with a partial torque of its available torque and thereafter continues this acceleration and at the same time tow-starts the internal combustion engine, and wherein after tow-starting the internal combustion engine the latter then contributes to the acceleration of the vehicle, and wherein in a second mode the electric motor accelerates the vehicle initially with the full available torque, wherein later the internal combustion engine contributes to the acceleration of the vehicle, **characterised in that** in the second mode at the beginning the acceleration or on selection of the second mode the internal combustion engine is switched on and operated at idle speed until it contributes to the acceleration of the vehicle.

2. Method according to claim 1, **characterised in that** prior to the acceleration an actuating element is activated when the second mode is to be assumed.

3. Method according to any one of the preceding claims, **characterised in that** the acceleration takes place from standstill.

4. Motor vehicle comprising an electric motor as a drive and an internal combustion engine as a drive, **characterised by** an input device configured to change a mode assumed during acceleration, wherein a first mode is defined in that in the first mode firstly the electric motor accelerates the vehicle with a partial torque of its available torque and continues this acceleration at a later time point and at the same time tow-starts the internal combustion engine, and wherein after tow-starting the internal combustion engine the latter then contributes to the acceleration of the vehicle and wherein a second mode is defined in that in the second mode the electric motor accelerates the vehicle firstly at the full available torque, wherein later the internal combustion engine contributes to the acceleration of the vehicle and wherein in the second mode at the beginning of the acceleration or by selecting the second mode the internal combustion engine is switched on and is operated at idle speed until it contributes to the acceleration of the vehicle.

## Revendications

1. Procédé d'accélération d'un véhicule avec un moteur électrique comme entraînement et un moteur à combustion comme entraînement, dans lequel l'accélération se fait au choix dans deux modes, dans lequel, dans un premier mode, le moteur électrique accélère tout d'abord le véhicule avec un couple partiel de son couple disponible et, un moment plus tard, cette accélération se poursuit et entraîne simultanément le moteur à combustion, et dans lequel, après entraînement du moteur à combustion, celui-ci contribue de la sorte à l'accélération du véhicule, et dans lequel, dans un second mode, le moteur électrique accélère le véhicule tout d'abord avec le plein couple disponible, dans lequel le moteur à combustion contribue par la suite à l'accélération du véhicule,
**caractérisé en ce que**,
dans le second mode, au début de l'accélération ou en choisissant le second mode, le moteur à combustion est enclenché et est entraîné à vide jusqu'à ce qu'il contribue à l'accélération du véhicule.

2. Procédé selon la revendication 1, **caractérisé en ce que**, avant l'accélération, un élément de commande est enclenché si le second mode doit être adopté.

3. Procédé selon l'une quelconque des revendications précédentes, **caractérisé en ce que** l'accélération se fait à départ arrêté.

4. Véhicule automobile comportant un moteur électrique comme entraînement et un moteur à combustion comme entraînement, **caractérisé par** un dispositif d'alimentation qui est conçu pour échanger un mode adopté lors d'une accélération, dans lequel un premier mode est défini par le fait que, dans le premier mode, tout d'abord, le moteur électrique accélère le véhicule avec un couple partiel de son couple disponible et, un moment plus tard, cette accélération se poursuit et entraîne simultanément le moteur à combustion et dans lequel, après entraînement du moteur à combustion, celui-ci contribue de la sorte à l'accélération du véhicule, un second mode étant défini par le fait que, dans le second mode, le moteur électrique accélère le véhicule tout d'abord avec le plein couple disponible, dans lequel, par la suite, le moteur à combustion contribue à l'accélération du véhicule et dans lequel, dans le second mode, au début de l'accélération ou avec le choix du second mode, le moteur à combustion est enclenché et est entraîné à vide jusqu'à ce qu'il contribue à l'accélération du véhicule.
